# FASCICULE DE BREVET EUROPEEN

(11) **EP 0 897 543 B1**
(45) Date de publication et mention de la délivrance du brevet: **21.11.2001**
(21) Numéro de dépôt: 97923155.2
(22) Date de dépôt: 07.05.1997
(51) Int. Cl.: G01S 3/48, G01S 3/04

(54) **DISPOSITIF DE MESURES INTERFEROMETRIQUES AVEC UN RECEPTEUR SUPERHETERODYNE**
VORRICHTUNG ZUR INTERFEROMETRISCHEN MESSUNG MIT EINEM ÜBERLAGERUNGSEMPFÄNGER
INTERFEROMETRIC MEASUREMENT DEVICE WITH A SUPERHETERODYNE RECEIVER

(30) Priorité: 07.05.1996 FR 9605690
(43) Date de publication de la demande: 24.02.1999
(73) Titulaire: Thales, 75008 Paris (FR)
(72) Inventeur: CANAL, Yves, 94117 Arcueil Cedex (FR); POUDEROUS, Emile, 94117 Arcueil Cedex (FR)
(74) Mandataire: Chaverneff, Vladimir
(86) Numéro de dépôt international: FR9700822
(87) Numéro de publication internationale: WO9742518

(56) Documents cités:
- FR-A- 2 661 507
- US-A- 4 236 159

## Description

La présente invention se rapporte à un dispositif de mesures interférométriques avec un récepteur superhétérodyne.

Dans des équipements fonctionnant en hyperfréquences, tels que les systèmes d'écoute des radars, on peut être amené à effectuer des mesures interférométriques entre des signaux impulsionnels reçus par au moins deux antennes pour situer géographiquement la source des signaux.

La réception des signaux hyperfréquences peut se faire soit par détection directe, ce qui nécessite un récepteur à large bande, soit à l'aide d'un récepteur superhétérodyne, dont la sensibilité est meilleure que celle d'un récepteur à détection directe, mais qui nécessite de réaliser l'accord sur la fréquence des signaux que l'on veut recevoir.

Si l'on se contente ou si l'on doit se contenter d'une seule impulsion reçue, il faut effectuer, à partir de cette impulsion, à la fois des mesures de fréquence et interférométriques. La sensibilité de réception est alors relativement faible (-60 dBm par exemple).

Pour améliorer la sensibilité de réception, on peut exploiter deux impulsions consécutives. La première de ces impulsions est utilisée pour déterminer la fréquence de l'onde reçue, afin de caler le récepteur sur la fréquence correcte. Ce dispositif de calage de voies de mesure utilise un synthétiseur de fréquences rapide et nécessite une impulsion suffisamment longue. Un tel synthétiseur de fréquence est onéreux. La deuxième impulsion peut alors être exploitée de façon optimale pour les mesures interférométriques. Bien entendu, un tel procédé ne peut être mis en oeuvre que si l'on dispose effectivement de deux impulsions et si on peut attendre l'arrivée de la deuxième pour effectuer les mesures interférométriques. Du fait d'un accord précis sur la fréquence des signaux reçus, la sensibilité est nettement meilleure que lorsque l'on exploite qu'une seule impulsion.

On connaît d'après le document FR-A-2 661 507 un dispositif de mesures interférométriques à récepteur à détection directe et ligne à échantillonnage spatial, mais ce dispositif manque de sensibilité et est relativement complexe dans sa partie de calcul.

La présente invention a pour objet un dispositif de mesures interférométriques à réception superhétérodyne qui puisse se contenter d'une seule impulsion courte pour réaliser les mesures avec la meilleure sensibilité possible et le plus rapidement possible, tout en étant le moins onéreux possible.

Le dispositif de mesures conforme à l'invention comporte au moins une ligne à échantillonnage spatial en montage différentiel et un circuit de mesure interférométrique, et il est caractérisé par le fait qu'il comporte au moins deux voies de réception superhétérodyne suivies chacune d'un filtre définissant la bande de réception en fréquence intermédiaire, et d'au moins une ligne à échantillonnage spatial utilisée en sous-échantillonnage. Selon un aspect de l'invention, le circuit de mesure interférométrique est un dispositif d'extraction de l'angle d'incidence des signaux reçus.

La présente invention sera mieux comprise à la lecture de la description détaillée d'un mode de réalisation, pris à titre d'exemple non limitatif et illustré par le dessin annexé, sur lequel :
- les figures 1A et 1B sont des variantes du bloc-diagramme d'un dispositif de mesures interférométriques de l'art antérieur, et
- la figure 2 est un bloc-diagramme d'un dispositif de mesures interférométriques conforme à l'invention.

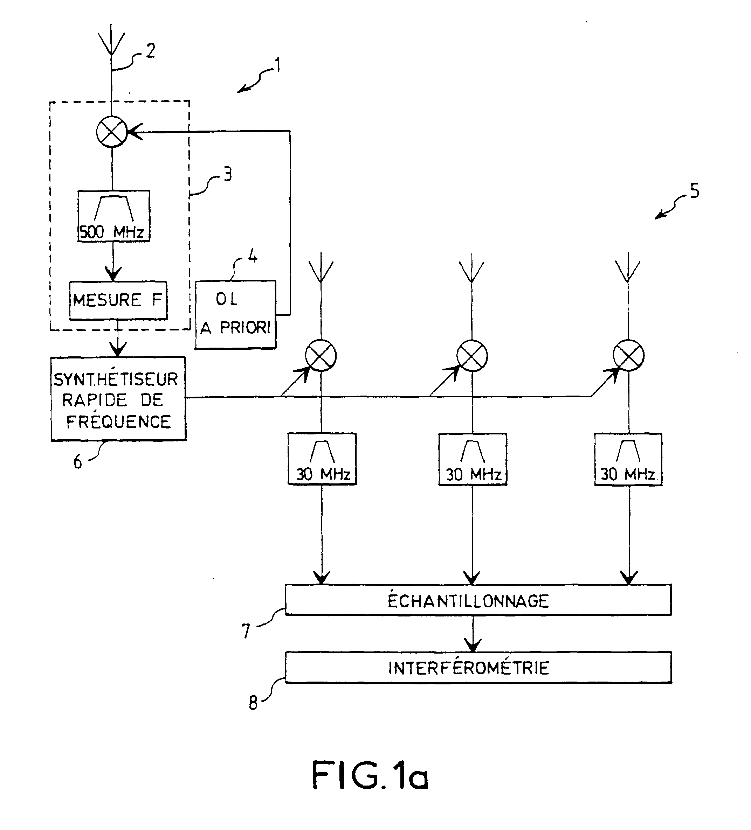

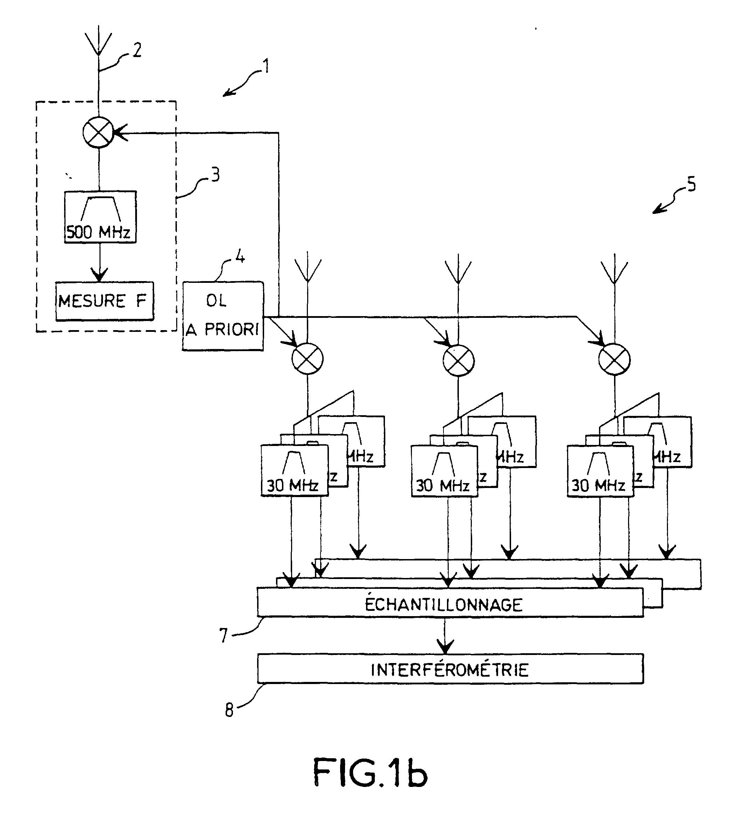

Le dispositif de mesure connu 1, schématiquement représenté sur les figures 1A et 1B, est par exemple destiné à fonctionner dans la bande de fréquences 2 à 18 GHz. Ce dispositif 1 comporte essentiellement une première antenne de réception 2 suivie d'un dispositif 3 de mesure de fréquence à large excursion de fréquence intermédiaire (par exemple 500 à 1000 MHz), relié à un oscillateur local 4. D'autre part, le dispositif. 1 comporte un ensemble 5 de plusieurs (par exemple trois) voies de réception pour l'analyse des signaux reçus. Chacune de ces voies comprend une antenne, des circuits amplificateurs et un mélangeur. Dans le cas de la figure 1A ( mesure non instantanée), la sortie du dispositif 3 commande un synthétiseur de fréquences rapide 6, dont la sortie est reliée aux différents mélangeurs de l'ensemble 5. On recueille sur les sorties en fréquence intermédiaire des mélangeurs de l'ensemble 5 des signaux dont la fréquence a une excursion réduite (largeur de bande d'environ 30 MHz par exemple). Les signaux de sortie des mélangeurs de l'ensemble 5 sont échantillonnés en 7 à une fréquence sensiblement égale au double de la fréquence supérieure de la bande de fréquence intermédiaire considérée, et exploités (en 8) de façon habituelle pour réaliser des mesures interférométriques. Cela permet de réaliser les deux mesures (fréquence et interférométrie) après le temps nécessaire au synthétiseur pour fournir la fréquence nécessaire.

Dans le cas de la figure 1B (mesure instantanée), la sortie du dispositif 3 fournit la mesure de la fréquence des signaux reçus. Les sorties des mélangeurs de l'ensemble 5 sont réparties sur un ensemble de filtres étroits (par exemple de 30 MHz de largeur) répartis dans la bande de 500 MHz. Après échantillonnage en 7 des sorties des filtres correspondant au signal reçu, et leur exploitation en 8, on obtient la mesure d'interférométrie en même temps que la mesure de fréquence.

Dans les deux cas (figures 1A et 1B), les circuits mis en oeuvre sont complexes. L'objet de l'invention permet une grande simplification, tout en permettant les mesures simultanées de la fréquence et de l'interférométrie.

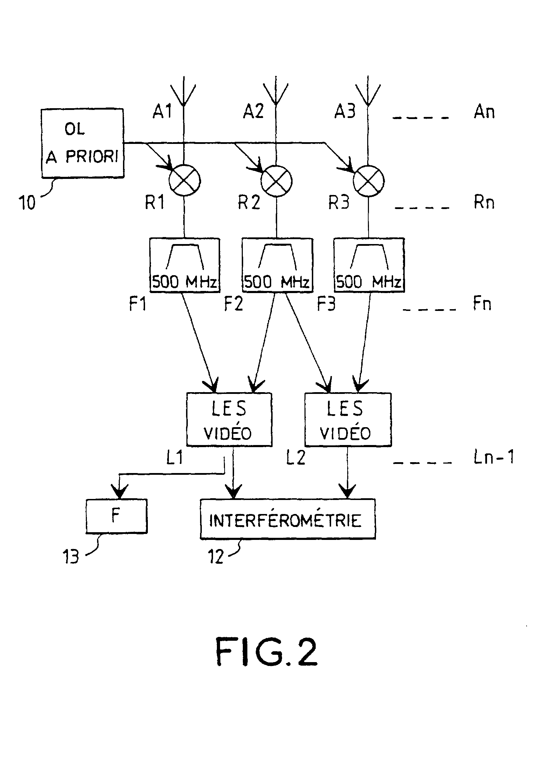

On a représenté en figure 2 le bloc-diagramme d'un dispositif conforme à l'invention, destiné à fonctionner dans la même bande de fréquences que le dispositif des figures 1A et 1B. Ce dispositif comporte n antennes A1 à An (n = 3 par exemple), suivies chacune d'un étage de réception superhétérodyne, respectivement R1 à Rn, dont on n'a représenté que le mélangeur. Les différents mélangeurs des étages R1 à Rn sont reliés à un oscillateur local 10. Les sorties des mélangeurs des étages R1 à Rn sont reliées chacune à un filtre passe-bande, ces filtres étant respectivement référencés F1 à Fn. Ces filtres identiques définissent la bande en fréquence intermédiaire. Chacun de ces filtres F1 à Fn a, par exemple, une largeur de bande de 500 MHz environ et est centré sur la fréquence intermédiaire centrale).

A chaque fois deux filtres consécutifs de l'ensemble F1 à Fn sont reliés à une ligne à sous-échantillonnage spatial L1 à Ln-1. Les différents points d'échantillonnage (sorties) des lignes L1 à Ln-1 sont reliés à un dispositif interférométrique classique 12 d'extraction de l'angle d'arrivée des impulsions reçues, ainsi qu'à un dispositif 13 de mesure de fréquence.

Dans le dispositif décrit ci-dessus, les lignes à sous-échantillonnage sont disposées en montage différentiel par rapport à chacun des couples de voies issues de filtres F1 à Fn. Ces lignes à échantillonnage spatial, par exemple telles que celles décrites dans le brevet français 2 690 749 au nom de la Demanderesse, sont utilisées de façon particulière en sous-échantillonnage. Grâce au sous-échantillonnage spatial, ces lignes transposent la bande de réception à l'origine (entre 0 et 500 MHz pour l'exemple cité ci-dessus). De par leurs propriétés (transformation de Fourier selon un axe spatial), ces lignes fournissent directement en sortie (entre sorties de même rang) une valeur de différence de phase entre les signaux reçus par un ensemble de trois antennes, dans une même bande de bruit étroite (environ 30 MHz de large pour l'exemple précité). Grâce à cette mesure directe, l'obtention du déphasage est instantanée, et donc indépendante de la durée du signal reçu. Le sous-échantillonnage spatial permet de réduire considérablement ( d'environ 3 fois ) le nombre de points d'échantillonnage des lignes L1 à Ln-1, et donc d'en simplifier la fabrication et d'en diminuer le coût, et cela, sans en dégrader les performances. Bien entendu, le dispositif décrit ci-dessus peut comporter, de façon connue en soi, des dispositifs de levée d'ambiguïtés d'interférométrie reliés à au moins quatre antennes.

## Revendications

1. Dispositif de mesures interférométriques comportant au moins une ligne à échantillonnage spatial en montage différentiel et un circuit de mesure interférométrique (12), **caractérisé par le fait qu'**il comporte au moins deux voies de réception superhétérodyne (R1-...Rn) suivies chacune d'un filtre (F1...Fn), ces filtres définissant la bande de réception en fréquence intermédiaire, et que chaque ligne (L1...Ln-1) à échantillonnage spatial est utilisée en sous-échantillonnage.

2. Dispositif selon la revendication 1, **caractérisé par le fait qu'**à chaque fois deux filtres consécutifs (F1...Fn) sont reliés à une ligne à sous-échantillonnage spatial (L1...Ln-1).

3. Dispositif selon la revendication 1 ou 2, **caractérisé en ce qu'**il comporte en outre un dispositif de mesure de fréquence (13) relié à la sortie d'au moins une des lignes.

4. Dispositif selon l'une des revendications 1 à 3, **caractérisé en ce que** le circuit de mesure interférométrique est un dispositif d'extraction d'angle d'incidence des signaux reçus.

5. Dispositif selon l'une des revendications précédentes, **caractérisé par le fait qu'** il comporte trois antennes, suivies chacune d'une voie de réception superhétérodyne.

6. Dispositif selon l'une des revendications précédentes, **caractérisé en ce qu'**il comporte en outre un dispositif de levée d'ambiguïté d'interférométrie.

7. Dispositif selon la revendication 6, **caractérisé par le fait que** le dispositif de levée d'ambiguïté est relié à au moins quatre antennes.

## Patentansprüche

1. Vorrichtung für interferometrische Messungen, mit wenigstens einer Leitung mit räumlicher Abtastung in differentieller Anordnung und einer interferometrischen Meßschaltung (12), **dadurch gekennzeichnet, daß** sie wenigstens zwei superheterodyne Empfangswege (R1, ..., Rn), denen jeweils ein Filter (F1, ..., Fn) folgt, umfaßt, wobei diese Filter das Zwischenfrequenz-Empfangsband definieren, und daß jede Leitung (L1, ..., Ln-1) mit räumlicher Abtastung zur Unterabtastung verwendet wird.

2. Vorrichtung nach Anspruch 1, **dadurch gekennzeichnet, daß** jeweils zwei aufeinanderfolgende Filter (F1, ..., Fn) mit einer Leitung (L1, ..., Ln-1) mit räumlicher Unterabtastung verbunden sind.

3. Vorrichtung nach Anspruch 1 oder 2, **dadurch gekennzeichnet, daß** sie außerdem eine Frequenzmeßvorrichtung (13) umfaßt, die mit dem Ausgang wenigstens einer dieser Leitungen verbunden ist.

4. Vorrichtung nach einem der Ansprüche 1 bis 3, **dadurch gekennzeichnet, daß** die interferometrische Meßschaltung eine Vorrichtung zum Entnehmen des Einfallswinkels der empfangenen Signale ist.

5. Vorrichtung nach einem der vorhergehenden Ansprüche, **dadurch gekennzeichnet, daß** sie drei Antennen, denen jeweils ein superheterodyner Empfangsweg folgt, umfaßt.

6. Vorrichtung nach einem der vorhergehenden Ansprüche, **dadurch gekennzeichnet, daß** sie außerdem eine Vorrichtung zum Beseitigen der interferometrischen Mehrdeutigkeit umfaßt.

7. Vorrichtung nach Anspruch 6, **dadurch gekennzeichnet, daß** die Vorrichtung zur Beseitigung der Mehrdeutigkeit mit wenigstens vier Antennen verbunden ist.

## Claims

1. Interferometric measurement device comprising at least one spatial sampling line in a differential arrangement and an interferometric measurement circuit (12), **characterized in that** it comprises at least two superheterodyne reception paths (R1-...Rn) each followed by a filter (F1...Fn), these filters defining the intermediate-frequency reception band, and **in that** each spatial sampling line (L1...Ln-1) is used in sub-sampling mode.

2. Device according to Claim 1, **characterized in that** on each occasion two consecutive filters (F1...Fn) are linked to a spatial sub-sampling line (L1...Ln-1).

3. Device according to Claim 1 or 2, **characterized in that** it furthermore comprises a frequency measurement device (13) linked to the output of at least one of the lines.

4. Device according to one of Claims 1 to 3,
**characterized in that** the interferometric measurement circuit is a device for extracting the angle of incidence of the signals received.

5. Device according to one of the preceding claims, **characterized in that** it comprises three antennas, each followed by a superheterodyne reception path.

6. Device according to one of the preceding claims, **characterized in that** it furthermore comprises an interferometry ambiguity removal device.

7. Device according to Claim 6, **characterized in that** the ambiguity removal device is linked to at least four antennas.
